# EUROPEAN PATENT APPLICATION

(11) **EP 1 693 841 A1**
(43) Date of publication of application: **23.08.2006**
(21) Application number: 04820190.9
(22) Date of filing: 07.12.2004
(51) Int. Cl.: G11B 17/04

(54) **SHUTTER OPENING/CLOSING MECHANISM AND INFORMATION REGENERATIVE DEVICE**

(30) Priority: 12.12.2003 JP 2003414230
(71) Applicant: Pioneer Corporation, Tokyo 153-8654 (JP)
(72) Inventor: NAGATA, Hitoshi; c/o Pioneer Corporation, Tokorozawa-shi, Saitama 3598522 (JP); FUKUSHIMA, Yoshimitsu; c/o Pioneer Corporation, Tokorozawa-shi, Saitama 3598522 (JP); MORITA, Yuji; c/o Pioneer Corporation, Tokorozawa-shi, Saitama 3598522 (JP); TANIMOTO, Katsuhiko; c/o Pioneer Corporation, Tokorozawa-shi, Saitama 3598522 (JP); HAMADA, Takeshi; c/o Pioneer Corporation, Tokorozawa-shi, Saitama 3598522 (JP)
(74) Representative: Townsend, Victoria Jayne
(86) International application number: PCT/JP2004/018181
(87) International publication number: WO 2005/057571

(57) **Abstract**

There is provided a shutter opening/closing apparatus which automatically performs shutter opening or closing in accordance with an insertion of a cartridge and does not give an influence, such as abnormal noise or backlash, to loading and unloading of a cartridge. The shutter opening/closing apparatus includes a follower member 18 configured to be engaged, at an opening 11 of the cartridge 10, with a portion of a drive member 13 driven in the cartridge 10 for opening or closing a shutter 15 provided for the cartridge, and a cam mechanism 7, 7a limiting a movement of the follower member 18 so as to avoid contact of the follower member 18 to the opening 11 of the cartridge 10 at a time when the engagement between the follower member 18 and the portion of the drive member 13 is released.

## Description

### Field of The Invention

The present invention relates to a technical field of a recording medium driving apparatus and an information reproducing apparatus provided with a shutter opening/closing mechanism provided for a cartridge, in which an information recording medium such as optical disk is accommodated, and configured to open and close a shutter which protects an optical disk or like.

### Background Art

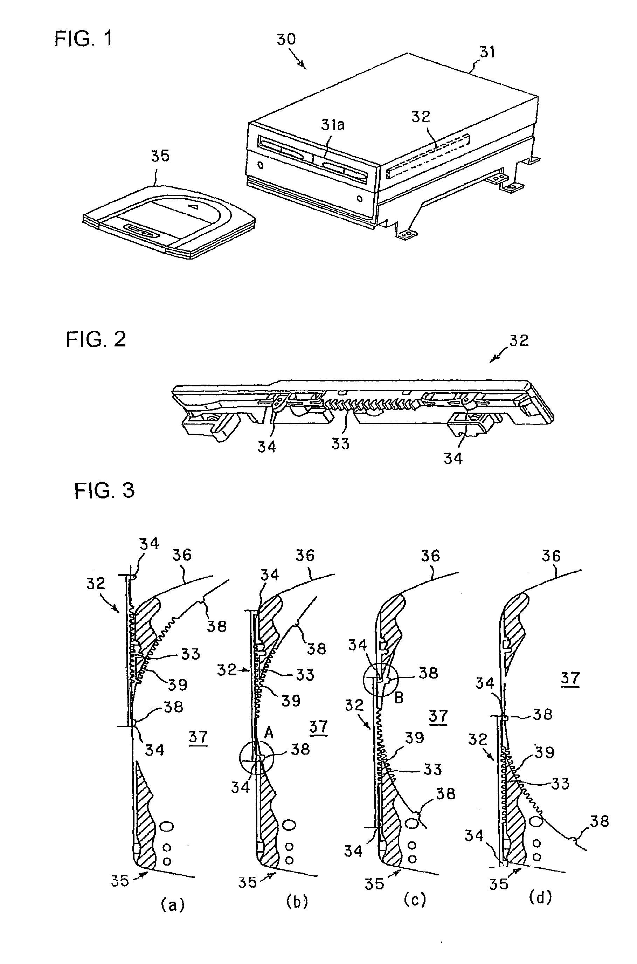

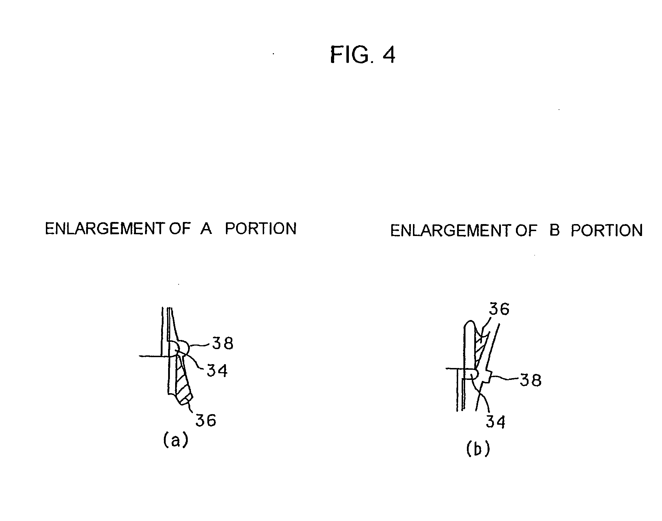

A shutter opening/ closing mechanism of a cartridge in which an information recording medium is accommodated exits conventionally. Such conventional shutter opening/closing mechanism will be explained hereunder with reference to Figs. 1 to 4.

Fig. 1 shows an information reproducing apparatus 30 which performs an information recording and/or reproducing operation with respect to an information recording medium. A shutter opening/closing mechanism for such information reproducing apparatus is automatically opened or closed by the loading or unloading of a cartridge 35.

The information reproducing apparatus 30 has a case 31 having a front surface in which a cartridge insertion hole 31a, through which the cartridge 35 is loaded or unloaded, is formed. A shutter is provided in the cartridge 35, and a shutter opener 32 for opening or closing a shutter in accordance with a relative motion to the information reproducing apparatus 30 at the time of loading the cartridge to or unloading it from the information reproducing apparatus is formed to an inner wall section of one of side portions of the case 31. The shutter is opened by rotating a wheel, not shown, in the cartridge 35 in accordance with a relative motion with respect to the shutter opener 32 at the time of loading the cartridge.

As shown in Fig. 2, the shutter opener 32 is provided with a rack 33 and protruded portions 34, 34 at both sides in the cartridge moving direction. The protruded portions 34 are always urged by a spring, not shown, toward a housing (36) side of the cartridge 35 as shown in Fig. 3.

With reference to Fig. 3, the operation of respective portions of the information reproducing apparatus 30 at the time of loading the cartridge 35 therein will be described hereunder.

Fig. 3 includes views (a) to (d), from the left side, which are sectional views showing cartridge loading sequence in this order, in which the cartridge 35 is loaded from the lower side to the upper side. According to this loading operation of the cartridge 35 with respect to the shutter opener 32, the shutter in the cartridge 35 is opened.

As shown in Fig. 3(a), when the cartridge 35 is loaded, one of the protruded portions 34 of the shutter opener 32 is engaged with one of two recessed portions 38 formed to an outer peripheral surface of a wheel 37, and the wheel 37 is rotated in a counter-clockwise direction in Fig. 3(a).

Next, as shown in Figs. 3(b) and 3(c), when the cartridge 35 is further moved, the wheel 37 is accordingly rotated, and the rack 33 formed to the shutter opener 32 is engaged with a rack 39 formed between the recessed portions 38 of the wheel 37 to thereby further rotate the wheel 37.

Then, as shown in Fig. 3(d), the other one protruded portion 34 of the shutter opener 32 is engaged with the other one recessed portion 39 of the wheel 37, and the other one protruded portion 34 is moved to the central portion of the cartridge 35. According to these series of motions, the shutter opening operation has been completed.

On the other hand, at the time of unloading the cartridge 35, operations reverse to those mentioned above will be performed to close the shutter opener 32.

The information reproducing apparatus provided with the shutter opening/ closing mechanism, which is opened at the cartridge loading time and closed at the cartridge unloading time, is disclosed in the following Patent Publications 1 and 2.

Patent Publication 1: Japanese Patent Unexamined Application (Laid-open) Publication No. 2003-109282

Patent Publication 2: Japanese Patent Unexamined Application (Laid-open) Publication No. 2003-115157

### Disclosure of The Invention

### Problems to be solved by The Invention

However, such conventional apparatus as mentioned above provides a problem such that the protruded portion 34 of the shutter opener 32 collides with the housing 36 of the cartridge 35 and strikes up the protruded portion 34, which will generate an abnormal noise.

In addition, in a case where the cartridge 35 is largely shifted in its position because of play or like, the movement of the cartridge becomes impossible when the protruded portion 34 collides with the housing 36, and hence, the mechanism for loading or unloading the cartridge may be entirely locked, also providing a problem.

Furthermore, at the cartridge loading or unloading time, since the protruded portion 34 always urges the side wall of the cartridge 35, there is a fear of unstable loading or unloading of the cartridge 35.

An object of the present invention is therefore to substantially eliminate defects or drawbacks encountered in the prior art mentioned above and to provide a shutter opening/closing mechanism capable of automatically opening or closing a shutter in accordance with the loading or unloading of a cartridge and being free from generation of abnormal noise and backlash without giving any influence to the cartridge loading or unloading operation.

### Means for solving The Problem

In order to solve the above problem, a shutter opening/closing apparatus of claim 1 comprises a follower member (18) configured to be engaged, at an opening (11) of a cartridge (10), with a portion of a drive member (13) driven in the cartridge (10) for opening or closing a shutter (15) provided for the cartridge, and a cam mechanism (7, 7a) limiting a movement of the follower member (18) so as to avoid a contact of the follower member (18) to the opening of the cartridge (10) at a time when the engagement between the follower member (18) and the portion of the drive member (13) is released.

A shutter opening/closing apparatus of claim 2 comprises a follower member (18) configured to be engaged, at an opening (11) of a cartridge (10), with a portion of a drive member (13) driven in the cartridge (10) for opening or closing a shutter (15) provided for the cartridge, and a cam mechanism (7, 7a) limiting a movement of the follower member (18) at a time when the cartridge (10) is loaded and disposed between the follower member (18) and the cartridge (10) at a position at which the follower member (18) does not engage with the portion of the drive member (13).

Further, in the present invention, the shutter opening/closing apparatus may further include urging means (17) for urging the follower member toward the caruidge.

### Brief Description of The Drawings

[Fig. 1] is a perspective view showing an information reproducing apparatus and a cartridge having conventional structures.
[Fig. 2] shows a perspective view of a shutter opener of conventional structure.
[Fig. 3] includes (a) to (d) representing a series of shutter opening or closing operation according to the conventional structure.
[Fig. 4] includes (a) and (b) representing an operation of the shutter opening or closing operation of at an essential portion of the cartridge in an enlarged scale.
[Fig. 5] is a developed perspective view of a cartridge according to one embodiment of the present invention.
[Fig. 6] is an illustrated perspective view of an information reproducing apparatus according to one embodiment of the present invention.
[Fig. 7] includes (a) to (d) representing a series of shutter opening or closing operation of the shutter opening/closing mechanism according to one embodiment of the present invention.
[Fig. 8] shows an operation of one example of a follower pin.
[Fig. 9] shows one example in which the follower pin of Fig. 8 is applied to a conventional structure.
[Fig. 10] shows another one example in which the follower pin in Fig. 8 is applied to a conventional structure.
[Fig. 11] is an illustrated perspective view showing a relationship between the follower pin and the cartridge when an arm is applied for a plate spring.

### Reference Numeral

2 --- information reproducing apparatus, 7, 7a --- cam, 10 --- cartridge, 11 --- opening, 13 --- wheel, 15 --- shutter, 17plate spring, 18 --- follower pin.

### Best Mode for embodying The Invention

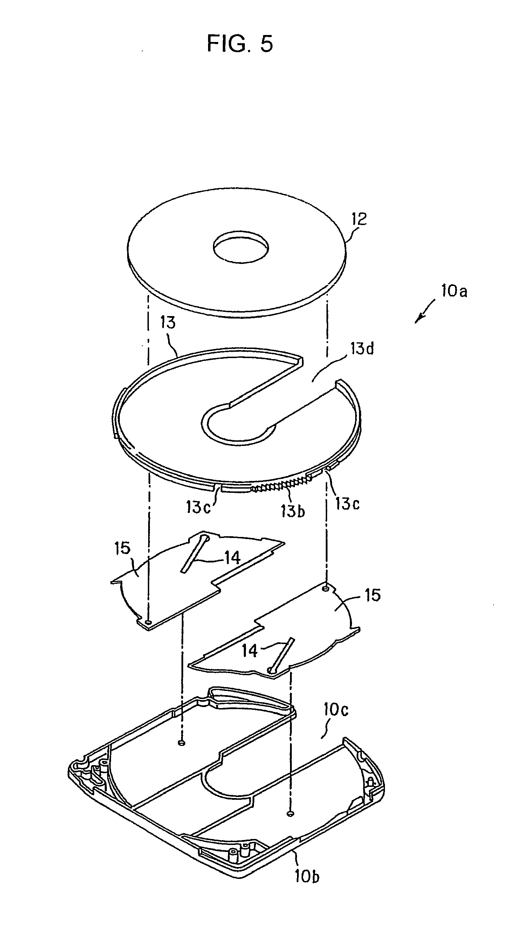

Hereunder, a best mode of a preferred embodiment of the present invention will be described in detail with reference to Figs. 5 to 10.

Further, it is to be noted that the mode of embodiment described hereunder is an embodiment in which the present invention is applied to an information reproducing apparatus such as optical disk player. Further, in the present invention, although the "information reproducing apparatus" is explained as one example, the present invention is not limited to such apparatus as far as it includes a shutter opening/closing mechanism described herein later. That is, the present invention is not limited to an information reproducing apparatus which reproduces an information and is applicable to an information recording apparatus which records an information and an information recording/ reproducing apparatus provided with information recording and reproducing functions.

Such information reproducing apparatus is one for performing reproduction of the information such as image, voice and the like while rotating an optical disk accommodated in a cartridge 10, mentioned herein later, by a rotating and driving unit such as turn table and moving an optical pickup in a radial direction with respect to the optical disk. It is further noted that the "information reproducing apparatus" of the present invention includes an information recording/reproducing apparatus having an information recording function, which can record the information to the optical disk, in addition to such information reproducing function as mentioned above.

Furthermore, the optical disk in this case may include CD-ROM (Compact Disc-Read Only Memory), CD-DA (CD Digital Audio), CD-R (CD-Recordable), CD-RW (CD-Re Recordable), Video-CD, CD-G (CD-Extended Graphics), DVD-ROM (Digital Versatile Disc-ROM), DVD-Video, DVD-Audio, DVD-R, DVD-RW, DVD-RAM, Blue-ray Disc and the like.

First, with reference to Fig. 5, the structure of the cartridge itself will be described.

As shown in Fig. 5, the cartridge 10 according to the present invention includes a cartridge body 10a having an opening opened at its side surface, which will be described herein later. The cartridge body 10a is composed of a upper half cartridge body, not shown, and a lower half cartridge body 10b.

Inside the cartridge body 10a, there is provided a wheel 13 to be rotatable therein, and a portion of the wheel 13 in the circumferential direction is exposed outward from the cartridge body 10a. This wheel 13 is one example of a drive or driving member of the present invention.

The lower cartridge body 10b is provided with a predetermined opening 10c in the radial direction for the access of a pickup element of the information reproducing apparatus for loading and unloading the cartridge 10 to the optical disk 12. The wheel 13 is equipped with a shutter 15 through a connection member 14. In addition, the wheel 13 is also provided with a predetermined opening 13d in the radial direction for the access of the pickup element of the information reproducing apparatus to the optical disk 12. The optical disk 12 is mounted to the upper portion of the wheel 13.

The shutter 15 is cooperated with the rotation of the wheel 13 and is opened or closed through the connection member 14. At a portion in the circumferential direction of the wheel 13, there is formed a rack 13b which is meshed with a rack 16 which will be mentioned herein later. Further, recessed portions 13c, 13c to be engaged with a follower or driven pin are formed at portions near both ends of the rack 13b. This follower pin is an example of a "follower member" of the present invention and the recessed portion 13c is a portion of a "drive member" of the present invention.

That is, in the described embodiment, although the rack, the follower pin, the recessed portion, and so on prescribe the engaging condition between the information reproducing apparatus and the cartridge, the present invention is not limited to these arrangements as far as the like functions are attainable.

The cartridge 10 is loaded into or unloaded from an opening, through a tray 5, of the information reproducing apparatus as will be mentioned herein later. The cartridge 10 is accordingly moved relatively with respect to the rack, the follower pin and the like disposed inside the case.

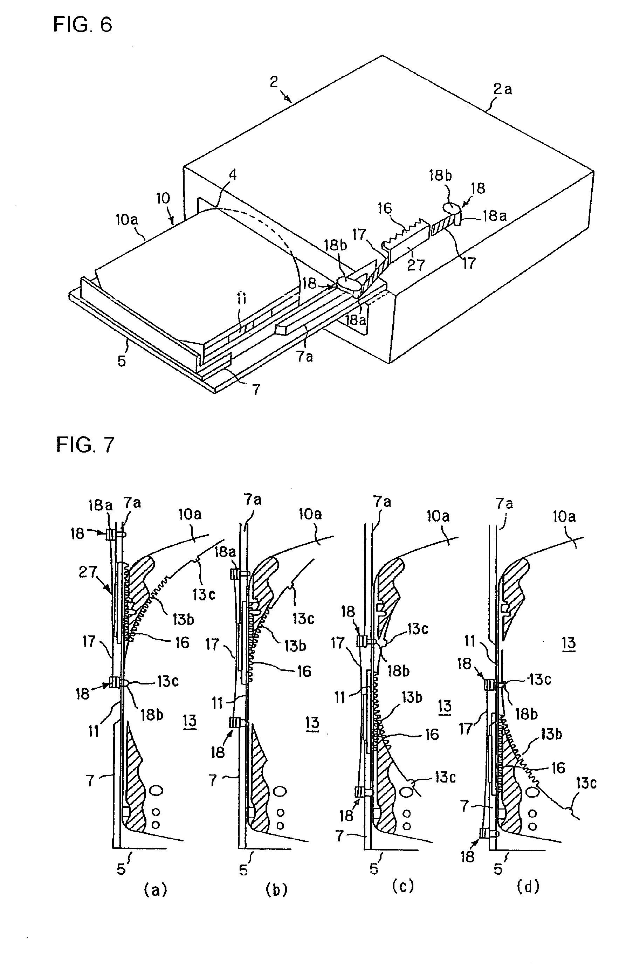

The information reproducing apparatus of the present invention will be described hereunder with reference to Figs. 6 to 10.

Fig. 6 shows a structure of the information reproducing apparatus, and this information reproducing apparatus 2 is provided with a case 2a having a flat box-shaped structure. The case 2a is formed, in its front surface, with an opening 4 in form of slit extending horizontally through which the cartridge 10 including an optical disk passes at the cartridge loading or unloading time.

Inside the case 2a, the tray 5 is arranged to be capable of being drawn into or drawn out of the case 2a through the opening 4. The tray 5 can be drawn out to a position at which the cartridge 10 is placed thereon and drawn into the case 2a to a position at which recording or reproducing operation can be performed by means of optical pickup element.

A drive unit, not shown, is connected to the tray 5 and driving means such as motor is mounted to this drive unit. These drive unit and driving means are accommodated in the case 2a. The tray 5 is hence drawn into or out of the case 2a by the operation of the drive unit.

Furthermore, the tray 5 is formed with a recessed portion at its central position so as to mount the cartridge 10 thereon and also formed with an opening for reading out information from the optical disk or writing information thereto.

The tray 5 is further provided, on one side portion thereof, with a cam mechanism including cams 7 and 7a for guiding the follower pin 18. These cams 7 and 7a are arranged at positions near both end portions of the opening 11 formed to the cartridge body 10a so that front ends of the cams 7 and 7a face inside the opening 11. According to such structure, the follower pin 10 can be prevented from contacting the cartridge body 10a at the cartridge loading or unloading time.

Surfaces of the cams 7 and 7a facing each other are formed so as to provide oblique shapes inclining toward the opening (11) side. According to the formation of such oblique surfaces of the cams 7 and 7a, the follower pin 18 is moved closely to the cartridge 10 or apart therefrom. In addition, since the follower pin 18 can be smoothly and stably moved, the generation of abnormal noise can be prevented or reduced.

A support member 27 is firmly secured to the inner one side wall of the case 2a along the moving direction of the tray 5, and the support member 27 is configured to support the follower pin 18 and the like so as to open or close the shutter 15 of the cartridge 10. The support member 27 is provided with a rack 16 and the follower pins 18, 18 disposed to both ends of the rack 16 through plate springs 17, 17.

Each of the follower pins 18, 18 is provided with a shaft 18a slid able to the cam 7 (7a) by the relative motion of the follower pin 18 with respect to the cartridge 10, and a protruded portion 18b formed to one end of the shaft 18a so as to be engage able with the recessed portion 13c of the wheel 13. On the other hand, each of the plate springs 17, 17 is attached so that the follower pin 18 is urged to the cartridge side. The protruded portions 18b, 18b are designed such that the central position of the shaft 18a of the follower pin 18 moving in accordance with the relative motion to the cartridge 10 is always positioned in a direction apart from the opening 11 of the cartridge 10 from the front end position of the cam 7 (7a)._According to such structure, the follower pins 18, 18, which are moved in a direction substantially perpendicular to the relative motion direction to the cartridge 10, can be smoothly moved.

Various equipments or elements for performing recording and reproducing operations to the optical disk mounted in the cartridge 10 are accommodated in case 2a.

With reference to Figs. 5 and 6, the wheel 13 is one example of a drive member of the present invention, and the information reproducing apparatus is one example of an apparatus to which a cartridge is loaded according to the present invention. Furthermore, the follower pin 18 is one example of a follower member of the present invention and the cams 7, 7a are one example of a cam mechanism of the present invention. The plate spring 17 is also one example of urging means of the present invention.

A shutter opening/closing mechanism for opening or closing the shutter 15 of the cartridge 10 will be described hereunder with reference to Fig. 7, in which like reference numerals are added to members or elements corresponding to those shown in Figs. 5 and 6.

First, as shown in Fig. 7(a), when the cartridge 10 is mounted on the tray 5 and the tray 5 starts to be loaded inside the information reproducing apparatus 2 by the drive member, not shown, the shaft 18a of the one follower pin 18, which is disposed near the outside of the information reproducing apparatus 2, slides along the surface of the cam 7a so as to face the one end of the opening 11 of the cartridge body 10a. Then, the protruded portion 18b of this one follower pin 18 guided by the cam 7a is engaged with one of the recessed portions 13c of the wheel 13 exposed from the opening 11 and moved with respect to the cartridge 10 to thereby rotate the wheel 13.

Thereafter, as shown in Fig. 7(b), the tray 5 is guided deeply inside the information reproducing apparatus 2 so as to be accommodated therein, the shaft 18a of the one follower pin 18 is guided by the other one cam 7, the protruded portion 18b of this follower pin 18 is moved apart from the opening 11 of the cartridge body 10a, and then, the rack 13b of the wheel 13 and the rack 16 disposed on the side of the information reproducing apparatus 2 are meshed with each other to thereby further rotate the wheel 13.

Next, as shown in Fig. 7(c), the shaft 18a of the other one follower pin 18 is guided to the opening 11 of the cartridge body 10a by the cam 7a.

Furthermore, when the tray 5 is accommodated deeply inside the information reproducing apparatus 2, as shown in Fig. 7(d), the protruded portion 18b of the other one follower pin 18 is engaged with the exposed other one recessed portion 13c of the wheel 13, which is then rotated to the predetermined position and stopped there. In association with the rotation of the wheel 13, the shutter 15 is opened through the connection member 14, and at this time, since the protruded portion 18b of the other one follower pin 18 is engaged with the recessed portion 13c of the wheel 13, the wheel 13 can be prevented from rotating in the reverse direction, whereby the shutter 15 can be kept opened fully stably.

Further, at the time of unloading the cartridge 10, when the tray starts to be drawn outward, as shown in Fig. 7(d), the shaft 18a of the other one follower pin 18 is guided by the cam 7a, and while retiring from the opening 11 of the cartridge body 10a, the rack 13b of the wheel 13 and the rack 16 provided for the information reproducing apparatus 2 are meshed with each other to thereby rotate the wheel 13.

Next, when the tray 5 is further drawn out, as shown in Fig. 7(b), the shaft 18a of the one follower pin 18 is moved in the slid able fashion along the other one cam 7 so as to face a portion near the other end of the opening 11 of the cartridge body 10a.

Thereafter, when the tray 5 is further drawn outward, as shown in Fig. 7(a), the protruded portion 18b of the one follower pin 18 is engaged with the exposed one recessed portion 13c of the wheel 13, whereby the wheel 13 is rotated in the reverse direction and stopped to the predetermined position. In association with this reverse rotation of the wheel 13, the shutter 15 is closed through the connection member 14.

Furthermore, when the tray 5 is drawn completely outside to the draw-out position, the shaft 18a of the one follower pin 18 is guided to the one cam 7a and separated from the opening 11 of the cartridge body 10a.

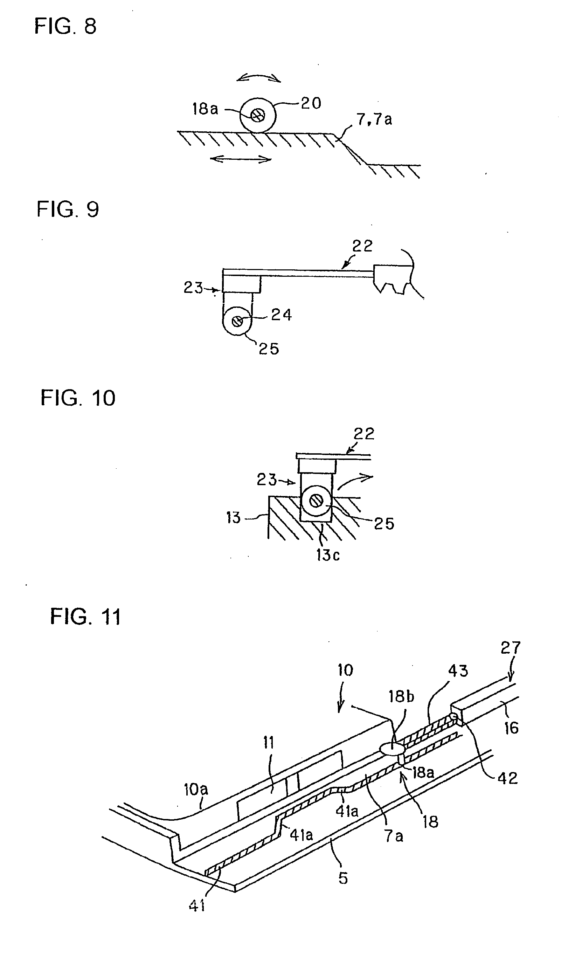

Incidentally, as shown in Fig. 8, the shaft 18a of the follower pin 18 may be provided, on its outer peripheral surface, with a rotating member 20 (such as roller or like). According to this arrangement, when the shaft 18a of the follower pin 18 is moved along the cams 7, 7a due to the relative movement of the cartridge 10 with respect to the case 2a, the rotating member 20 slides, while rotating, along the cams 7, 7a, so that the friction resistance is reduced and the smooth movement can be ensured.

If the like improvement would be effected to the conventional technology mentioned hereinbefore, as shown in Fig. 9, it may be considered that the front end portion of the protruded portion 23 of the shutter opener 22 is constituted by a shaft 24 and a rotating member 25. However, in such arrangement, as shown in Fig. 10, when the recessed portion 13c formed to the wheel 13 of the cartridge 10 and the protruded portion 23 of the shutter opener 22 are engaged, there is a fear that the engagement may be made loosen and the wheel can not be rotated by a necessary amount. In addition, at the cartridge loading time, since the pickup member approaches the surface of the optical disk, it is always necessary for the shutter to be opened. For this reason, if the wheel 13 is incompletely rotated, the shutter 15 is not fully opened, and in the worst case, the pickup member may collide with the shutter and break it. Accordingly, it is considered to be impossible to apply the rotating member 25 to the conventional technology or structure.

Hereunder, with reference to Fig. 11, there is explained a case in which the plate spring 17 which urges the follower pin 18, shown in Fig. 6, toward the cartridge 10 is eliminated.

Fig. 11 is a view showing a relationship between the follower pin and the cartridge in the case when an arm is utilized in place of the plate spring shown in Fig. 6. In Fig. 11, like reference numerals are added to portions or members in Fig. 6 and the explanations thereof are omitted herein.

As shown in Fig. 11, a cam groove 41 for guiding the follower pin 18 is formed to one side portion of the tray 5, and when the follower pin 18 moving along the cam groove 41 relative to the cartridge 10 faces the opening 11 formed to the cartridge body 10a and separates from the opening 11, the cam groove 41 is formed so as to avoid the contacting to the opening 11 or cartridge body 10a. Further, the cam groove 41 has curved portions 41a, 41a at portions near both ends of the opening 11 of the cartridge body 10a. These curved portions 41a, 41a of the cam groove 41 serve to allow the follower pin 18 to approach or separate from the cartridge 10. According to this structure, at the time of cartridge loading or unloading time, the follower pin 18 can be prevented from contacting the cartridge body 10a.

Furthermore, an arm 43 is attached, through a rotational shaft 42, to both end portions of the rack 16 of the support member 27 mounted to one inside wall of the case 2a, and the follower pin 18 is attached to the front end of this arm 43.

According to the structure mentioned above, by the relative motion to the cartridge 10, the shaft 18a of the follower pin 18 slides along the cam groove 41, and since the follower pin 18 is limited in its movement by the cam groove 41, the follower pin 18 can be smoothly moved.

As mentioned above, it is not always necessary for the follower pin 18 to be urged on the cartridge side, and for example, the follower pin 18 is substituted for the plate spring 17 shown in Fig. 6, and the follower 18 is attached to the rack 16 through the arm 43 rotating around the rotational shaft 42 so that the follower pin 18 is movable along the cam groove 41 formed to the tray 5.

According to the present embodiment, as mentioned above, the shutter apparatus as the shutter mechanism of the present invention includes the follower pin 18 engaging, at a portion of the opening 11 of the cartridge 10, with a portion of the wheel 13 driven in the cartridge 10 so as to open or close the shutter 15 provided for the cartridge 10, and also includes the cams 7, 7a limiting the movement of the follower pin 18 so as to avoid the contact of the follower pin 18 to the opening 11 of the cartridge 10 at the time of disengagement between the follower pin 18 and the portion of the wheel 13. In other words, the shutter mechanism includes the follower pin 18 engaging, at the opening 11 of the cartridge 10, with the portion of the wheel driven in the cartridge so as to open or close the shutter provided for the cartridge 10, and also includes the cams 7, 7a limiting the movement of the follower pin 18 and positioned between the follower pin 18 and the cartridge 10 at the position at which the follower pin 18 and the portion of the wheel 13 are not engaged with each other.

According to such structure, the follower pin 18 does not contact the cartridge 10 and the generation of abnormal noise can be prevented. In addition, since the follower pin 18 is guided by the cams 7, 7a, the follower pin 18 does not contact the cartridge 10, and the loading or unloading operation of the cartridge can be stably done. Furthermore, since the follower pin 18 does not contact the cartridge 10, even if the position of the cartridge 10 is largely shifted because of existence of backlash or like, the shutter mechanism is not locked.

More specifically, the cams 7, 7a have the inclining portions, and when the engagement between the follower pin 18 and the portion of the wheel 13 is released, the follower pin 18 is restricted so as to be moved along the inclining portion to be apart from the portion of the wheel 13. Thus, the follower pin 18 can be surely and smoothly retired from the cartridge 10.

Furthermore, the follower pin 18 has the shaft 18a sliding along the cams 7, 7a through the relative motion and the protruded portion 18b formed at both the ends of the shaft 18a and engaging with the portion of the wheel 13. The shaft 18a may be provided with a roller so as to roll around the outer periphery of the shaft 18a. According to this structure, the shaft 18a of the follower pin 18 moving through the relative motion of the cartridge 10 with respect to the information reproducing apparatus 2 can contribute to reduce the noise at the time of the sliding motion of the shaft 18a on the cams 7, 7a. In addition, the frictional resistance at the sliding time of the shaft 18a on the cams 7, 7a can be reduced by utilizing the roller 20 (rotating member) as the shaft 18a of follower pin 18, so that the noise at the sliding time can be reduced from generating.

Further, it is desirable that the center of the shaft 18a of the follower pin 18 is positioned in a direction apart from the opening 11 of the cartridge 10 from the position of the front end of the cam 7 (7a). According to this structure, the follower pin 18 does not directly contact the cartridge 10, so that the follower pin 18 can be smoothly moved.

Furthermore, it is also desirable that the cams 7, 7a are formed to the portions near both the ends of the opening 11 of the cartridge 10, and the cams 7, 7a are formed with the inclining portions for guiding the follower pin 18 in the direction apart from the portion of the wheel 13 when the engagement between the follower pin 18 and the portion of the wheel 13 is released. According to this structure, the follower pin 18 can be surely and smoothly retired from the cartridge 10.

Still furthermore, the shutter mechanism and reproducing means for reproducing information of the optical disk 12 accommodated in the cartridge 10 may be provided. According to this structure, the shutter 15 of the cartridge 10 can be automatically opened or closed to thereby reproduce the optical disk 12.

Furthermore, in the described embodiment, although the shutter mechanism is applied to the information reproducing apparatus 2 configured to load the cartridge 10 to the recording and reproducing position in the case of the information reproducing apparatus 2 and unload it to the drawn-out position for mounting the cartridge 10 on the tray 5, the shutter mechanism may be applied to so-called a slot-in type information reproducing apparatus.

## Claims

1. A shutter opening/ closing apparatus comprising:
a follower member configured to be engaged, at an opening of a cartridge, with a portion of a drive member driven in the cartridge for opening or closing a shutter provided for the cartridge; and
a cam mechanism limiting a movement of the follower member so as to avoid contact of the follower member to the opening of the cartridge at a time when the engagement between the follower member and the portion of the drive member is released.

2. A shutter opening/ closing apparatus comprising:
a follower member configured to be engaged, at an opening of a cartridge, with a portion of a drive member driven in the cartridge for opening or closing a shutter provided for the cartridge; and
a cam mechanism limiting a movement of the follower member at a time when the cartridge is loaded and disposed between the follower member and the cartridge at a position at which the follower member does not engage with the portion of the drive member.

3. The shutter opening/closing apparatus according to claim 1 or 2, wherein the cam member has an inclination and the follower member is limited in the movement thereof so as to be apart from the portion of the drive member along the inclination of the cam member at the time when the engagement between the follower member and the portion of the drive member is released.

4. The shutter opening/closing apparatus according to claim 1 wherein the follower member includes a shaft sliding along the cam mechanism through a relative movement therebetween; and
a protruded portion formed at one end of the shaft so as to be engaged with the portion of the drive member.

5. The shutter opening/closing apparatus according to claim 4, wherein the shaft is provided, at an outer peripheral portion thereof, with a rotating member to be rotatable.

6. The shutter opening/closing apparatus according to claim 4 or 5, wherein the shaft has a center positioned in a direction apart from the opening of the cartridge than a front end of the cam mechanism.

7. The shutter opening/closing apparatus according to claim 1, wherein the cam mechanism is formed with inclining surfaces formed to portions near both ends of the opening of the cartridge so as to guide the follower member in a direction apart from the portion of the drive member at the time when the engagement between the follower member and the portion of the drive member is released.

8. An information reproducing apparatus comprising;
a shutter opening/closing apparatus according to any one of claims 1 to 7; and
reproducing means for reproducing an information of a recording medium accommodated in the cartridge.
